# EUROPEAN PATENT APPLICATION

(11) **EP 4 745 615 A1**
(43) Date of publication of application: **20.05.2026**
(21) Application number: 24213357.7
(22) Date of filing: 15.11.2024
(51) Int. Cl.: G01S 7/35, G01S 13/34

(54) **FMCW RADAR**

(71) Applicant: NXP B.V., 5656 AG Eindhoven (NL)
(72) Inventor: JANSSEN, Erwin Johannes Gerardus, 5656 AG Eindhoven (NL); BREKELMANS, Johannes Hubertus Antonius, 5656 AG Eindhoven (NL)
(74) Representative: Hardingham, Christopher Mark

(57) **Abstract**

A frequency modulated continuous wave, FMCW, radar system comprising: a transmitter circuit configured to transmit FMCW chirps at a chirp frequency, wherein the transmitter circuit is operable in either: an acquisition phase, during which the transmitter circuit is configured to change the frequency of an output signal from a first frequency to a second frequency; or a reset phase, during which the transmitter circuit is configured to change the frequency of the output signal from the second frequency to the first frequency; wherein an FMCW chirp is defined by the output signal over the course of one acquisition phase and one reset phase; a receiver circuit, the receiver circuit comprising an analogue to digital converter, ADC; and a controller configured to: enable the ADC during each acquisition phase of the transmitter circuit, and disable the ADC during a reset phase of the transmitter circuit.

## Description

### Field

The present disclosure relates to radar systems. In particular, to frequency modulated continuous wave radar systems.

### Summary

According to a first aspect of the present disclosure there is provided a frequency modulated continuous wave, FMCW, radar system comprising:
a transmitter circuit configured to transmit FMCW chirps at a chirp frequency, wherein the transmitter circuit is operable in either:
   an acquisition phase, during which the transmitter circuit is configured to change the frequency of an output signal from a first frequency to a second frequency; or
   a reset phase, during which the transmitter circuit is configured to change the frequency of the output signal from the second frequency to the first frequency; wherein
      an FMCW chirp is defined by the output signal over the course of one acquisition phase and one reset phase;
a receiver circuit, the receiver circuit comprising an analogue to digital converter, ADC; and
a controller configured to:
   enable the ADC during each acquisition phase of the transmitter circuit, and
   disable the ADC during a reset phase of the transmitter circuit.

In one or more embodiments the controller is configured to disable the ADC during each reset phase of the transmitter circuit.

In one or more embodiments the controller is configured to disable the ADC during some, but not all, of the reset phases of the transmitter circuit.

In one or more embodiments the ADC comprises one or more transistors.

In one or more embodiments:
each transistor comprises a control terminal; and
disabling the ADC may comprise discharging the control terminals each of the one or more transistors.

In one or more embodiments:
the ADC comprises a plurality of input stages; and
the controller may be configured to enable a different one of the plurality of input stages during the acquisition phase of the transmitter circuit.

In one or more embodiments the controller is configured to sequentially enable the plurality of input stages of the ADC, such that only one of the plurality of input stages of the ADC is enabled during each acquisition phase of the transmitter circuit.

In one or more embodiments:
the FMCW radar system comprises a plurality of ADCs; and
the controller may be configured to enable a different one of the plurality of ADCs during each acquisition phase of the transmitter circuit.

In one or more embodiments the controller is configured to sequentially enable the plurality of ADCs. In one or more embodiments only one of the plurality of ADCs is enabled during each acquisition phase of the transmitter circuit. In one or more embodiments a different one of the plurality of ADCs is enabled during each subsequent acquisition phase of the transmitter circuit.

In one or more embodiments the ADC is configured to operate at a sampling frequency.

In one or more embodiments the sampling frequency is greater than the chirp frequency.

According to a second aspect of the present disclosure there is provided a method of operating an FMCW radar system comprising:
a transmitter circuit configured to transmit FMCW chirps at a chirp frequency, wherein the transmitter circuit is operable in either:
   an acquisition phase, during which the transmitter circuit is configured to change the frequency of an output signal from a first frequency to a second frequency; or
   a reset phase, during which the transmitter circuit is configured to change the frequency of the output signal from the second frequency to the first frequency; wherein
      an FMCW chirp is defined by the output signal over the course of one acquisition phase and one reset phase;
a receiver circuit, the receiver circuit comprising an analogue to digital converter, ADC;
the method comprising:
enabling the ADC during the acquisition phase of the transmitter circuit, and
disabling the ADC during the reset phase of the transmitter circuit.

In one or more embodiments the ADC comprises one or more transistors.

In one or more embodiments each transistor comprises a control terminal; and
disabling the ADC may comprise discharging the control terminals each of the one or more transistors.

In one or more embodiments:
the ADC comprises a plurality of input stages; and
the method may further comprise enabling a different one of the plurality of input stages during the acquisition phase of the transmitter circuit.

In one or more embodiments enabling a different one of the plurality of input stages during the acquisition phase of the transmitter circuit comprises sequentially enable the plurality of input stages of the ADC.

In one or more embodiments only one of the plurality of input stages of the ADC is enabled during each acquisition phase of the transmitter circuit.

In one or more embodiments:
the FMCW radar system comprises a plurality of ADCs; and
the method may further comprise enabling a different one of the plurality of ADCs during each acquisition phase of the transmitter circuit. In one or more embodiments only one of the plurality of ADCs is enabled during each acquisition phase of the transmitter circuit. In one or more embodiments a different one of the plurality of ADCs is enabled during each subsequent acquisition phase of the transmitter circuit.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows an example FMCW radar system;
Figure 2 shows the impact of the ADC flicker noise on a 2-dimensional (2D) distance-velocity fast-Fourier transform (FFT) for a case with relatively high flicker noise;
Figure 3 shows the impact of the ADC flicker noise on a 2-dimensional (2D) distance-velocity fast-Fourier transform (FFT) for a case with relatively low flicker noise;
Figure 4 shows an FMCW radar system according to an embodiment of the present disclosure;
Figure 5 shows an example ADC (and other relevant circuitry) which may be used within an FMCW radar system according to an embodiment of the present disclosure;
Figure 6 shows an example circuit which may be used within an FMCW radar system according to an embodiment of the present disclosure; and
Figure 7 shows a method for operating a FMCW radar system, according to an embodiment of the present disclosure.

### Detailed Description

In a frequency modulated continuous wave (FMCW) radar receiver, a fluctuating direct current (DC) offset is considered to be a problem, in particular because it can reduce the signal-noise ratio (SNR) at low distance & low velocity. The main underlying mechanism responsible for this DC offset is flicker noise emerging from active devices.

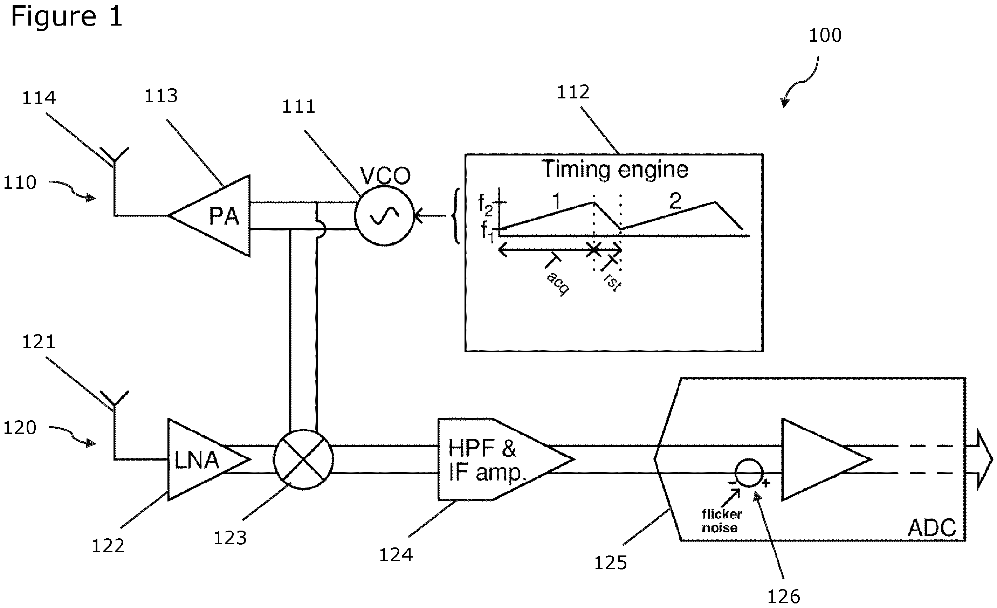

Figure 1 shows an example FMCW radar system 100. The FMCW radar system 100 is composed of a transmitter circuit 110 and a receiver circuit 120, which are used for sending and receiving FMCW chirps respectively. The FMCW chirps are generated by a voltage-controlled oscillator (VCO) 111 in the transmitter circuit 110, which is controlled by a timing engine 112. In other examples, the FMCW chirps may be generated with another device which is suitable for generating signals at varying frequencies. The FMCW chirps are then amplified by a power amplifier (PA) 113 and transmitted by a transmitter antenna 114.

In the FMCW radar receiver circuit 120, reflections of the transmitted FMCW (hereinafter named the received signals) are subsequently received by a receiver antenna 121. The received signals are then processed by a low-noise amplifier (LNA) 122, a mixer 123, and a filter circuit 124 (shown in the figure as HPF & IF amp) to provide the frequency selection that ensures sufficient SNR of the signal at the input of the analogue-to-digital converter (ADC) 125. The filter circuit 124 includes one or more filters and baseband amplifiers. The ADC 125 digitises the received signals for further signal processing by a DSP (not shown).

The timing engine 112 defines an acquisition phase (Tacq) and a reset phase (Trst) of the transmitter circuit 110. During the acquisition phase Tacq, the transmitter circuit 110 is configured to change the frequency of an output signal from a first frequency (f1) to a second frequency (f2) and during the reset phase, the transmitter circuit 110 is configured to change the frequency of the output signal from the second frequency f2 to the first frequency f1. The change is not instantaneous. That is, the transmitter circuit 110 is configured to gradually change the frequency of the output signals between the first frequency f1 and the second frequency f2. In this example, the second frequency f2 is greater than the first frequency f1. As such, during the acquisition phase Tacq, the VCO 111 is configured to increase the frequency of an output signal linearly in time from a first frequency (f1) to a second frequency (f2). During the reset phase Trst, the VCO 111 is configured to decrease the frequency of the output signal from the second frequency f2 to the first frequency f1. An FMCW chirp is defined by the output signal over the course of one acquisition phase Tacq and one reset phase Trst. A chirp frequency is defined by the frequency of chirps generated. In this example, the acquisition phase Tacq is longer than the reset phase Trst. In this example, the receiver circuit 120 is configured to only use the received signals that correspond to the acquisition phase Tacq when calculating the distance to and / or velocity of a detected object. In this way, the receiver circuit 120 is effectively inactive when processing signals that correspond to the reset phase Trst.

In the overall receiver circuit 120, the ADC 125 is a dominant source of flicker noise 126. Typically, the filter circuit 124 includes high-pass filters with a high enough cut-off frequency to ensure very low frequencies (for example below 1kHz) are sufficiently suppressed, including noise produced by amplifiers such as the LNA 122. However, the ADC 125 flicker noise 126 is not removed by these filters 125 and, as a result, reduces the SNR at low distance & low velocity. The ADC 125 noise contribution cannot be filtered out with conventional means (such as a band pass filter or a high pass filter placed after the ADC 125 in the receiver circuit 120) because such conventional means can result in transient settling properties that disrupt the signal and also affect the SNR.

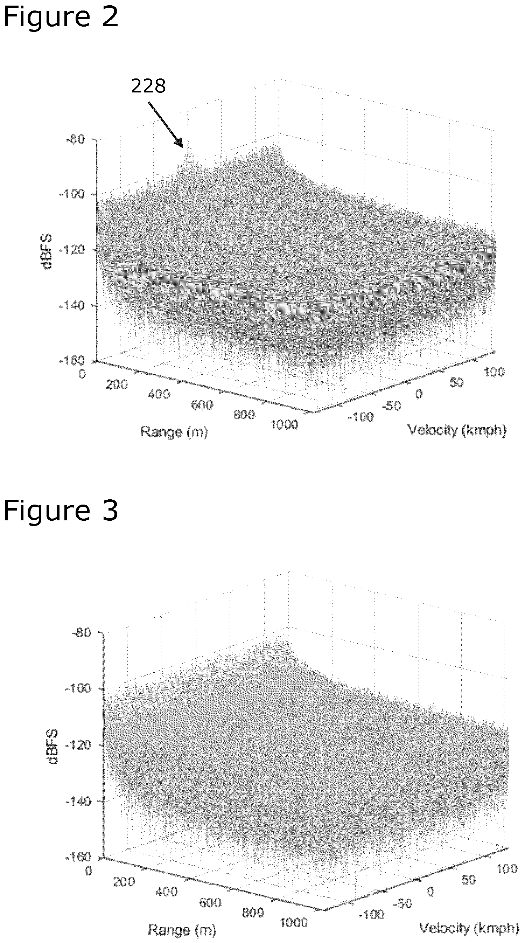

Figures 2 and 3 show the impact of the ADC flicker noise by way of a 2-dimensional (2D) distance-velocity fast-Fourier transform (FFT) plot. The vertical axes of the graphs are amplitude in dBFS (decibels relative to full scale). The axes that define the horizontal plane relate to range in metres and velocity in kilometres per hour. Such 2D distance-velocity FFT plots are known in the art.

Figure 2 shows the result of a 2D distance-velocity FFT for a case with relatively high flicker noise. Figure 3 shows the result of a 2D distance-velocity FFT for a case with relatively low flicker noise. This effect occurs due to noise at frequencies below the frequency bin size of the first FFT (the distance FFT). Therefore, this noise only becomes apparent after applying the second FFT (the velocity FFT). As is apparent from the figures, the loss of SNR in this part of the distance-velocity plot gives rise to a deterioration of performance for very nearby objects. This is especially true for very nearby objects with a very low velocity in the case of relatively high flicker noise, which is identified in Figure 2 with reference number 228. This can present a problem for implementations with sensor blockage detection procedures, for example.

In order to detect nearby influences on the radar sensor, it is important to ensure a sufficiently high SNR for very low frequencies, including those below the frequency bin size of the 1st FFT (the distance FFT). One approach to reduce an ADC's flicker noise for nearby detection is to apply polarity switching (chopping) of active devices in the input stage of the ADC. In particular to apply chopping around flicker noise sensitive circuits within the ADC. However, the introduction of chopping is not necessarily transparent to the operation of modulators and can lead to a considerably increased design complexity. This is especially true in the case of a continuous-time sigma-delta ADC, for example.

The frequency of the noise responsible for the SNR degradation at zero-velocity and zero-distance is (in some cases, far) below the frequency associated with the acquisition time (1/Tacq) used in the radar system. This provides the opportunity to counteract the ADC flicker noise by applying techniques on a time-grid given by Tacq, avoiding the need for a far more troublesome high-frequency chopping in the ADC. The rate of such high-frequency chopping, it if were related to the rate at which the quantisation is taking place, could be several orders of magnitude larger than the chirp frequency of the system. This would lead to a greatly increased complexity and power consumption of the ADC.

In particular, the inventors have found that the impact of the ADC flicker noise can be reduced by enabling and disabling the ADC (or active devices therein) such that the ADC is enabled during each acquisition phase of the transmitter circuit and the ADC is disabled during some or all of the reset phases of the transmitter circuit, as will be discussed in more detail below.

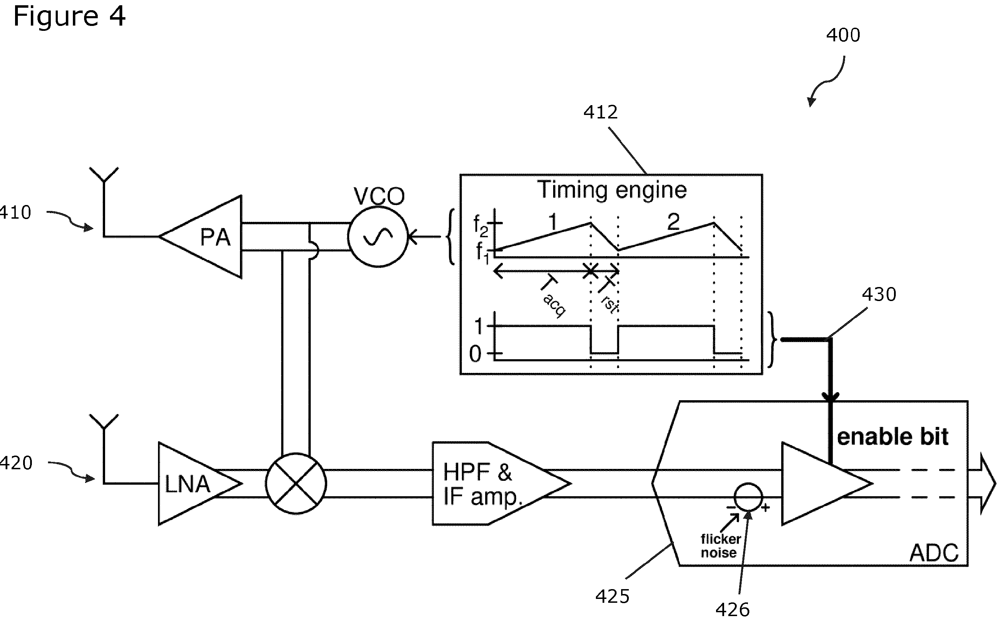

Figure 4 shows an FMCW radar system 400 according to an embodiment of the present disclosure. The FMCW radar system 400 includes a transmitter circuit 410, configured to transmit FMCW chirps at a chirp frequency and a receiver circuit 420 which includes an ADC 425. The ADC 425 may be configured to operate at a sampling frequency. The sampling frequency may be greater than the chirp frequency.

The transmitter circuit 410 is operable in either an acquisition phase Tacq, during which the transmitter circuit 410 is configured to change the frequency of an output signal from a first frequency f1 to a second frequency f2 or a reset phase Trst, during which the transmitter circuit 410 is configured to change the frequency of the output signal from the second frequency f2 to the first frequency f1. As such an FMCW chirp is defined by the output signal over the course of one acquisition phase Tacq and one reset phase Trst. The chirp frequency is defined by the frequency at which FMCW chirps are transmitted, or 1/(Trst + Tacq).

In some examples the FMCW radar system 400 may include a timing engine 412 configured to define the chirp frequency.

The FMCW radar system 400 also includes a controller (not shown) configured to enable the ADC 425 during each acquisition phase Tacq of the transmitter circuit 410 and disable the ADC 425 during a reset phase Trst of the transmitter.

In some embodiments, the controller is configured to disable the ADC 425 during each reset phase Trst of the transmitter circuit 410 (as represented in the figure by a binary signal in the lower half of the timing engine 412). In other embodiments, the controller is configured to disable the ADC 425 during some, but not all, of the reset phases Trst of the transmitter circuit 410. For example, disabling the ADC 425 during every second (or third or any other integer multiple) reset phase Trst of the transmitter circuit, disabling the ADC 425 during a reset phase Trst of the transmitter circuit 410 after a random number of reset phases Trst since the previous reset phase Trst during which the ADC 425 was disabled, or disabling the ADC 425 during a subsequent reset phase Trst of the transmitter circuit 410 after a measurement of a relevant parameter. In any case, the controller is configured to enable the ADC 425 during each acquisition phase Tacq of the transmitter circuit 410 in order to allow the receiver circuit 420 to interpret the reflected signals.

In this example, the controller is part of the timing engine 412 and the enabling and disabling of the ADC 425 is represented in the figure by a binary signal in the lower half of the timing engine 412 and connection 430. In other examples, the controller may be separate to the timing unit 412, and in yet more examples, the FMCW radar system 400 may not include a timing engine 412.

Beneficially, by temporarily disabling the ADC 425 during the reset phase Trst, the flicker noise is discontinuous which leads to a level of attenuation as there is less correlation between the noise which is present during subsequent acquisition phases Tacq. This is because, when the ADC 425 is re-enabled, the flicker noise effectively 'restarts' with a similar magnitude and with a different phase.

The ADC 425 may be enabled or disabled by any suitable mechanism, for example, by connecting and disconnecting the power supply from operational components or by shorting the ADC 425 entirely. This connection and disconnection may be controlled by a first control signal. For example, the control signal may be represented by a single bit, wherein a high state represents 'enable' and a low state represents 'disable'.

In some embodiments, one or more devices within the ADC which are typically responsible for producing flicker noise are disabled during the reset phase of the transmitter circuit 410. This approach may provide the majority of the above-described benefit, without any downsides which may be associated with the repeated activation and deactivation of irrelevant ADC components.

The method of temporarily disabling the noise sensitive circuit by switching off the devices that are mostly responsible for the flicker noise contribution reduces the amplitude of the low-frequency noise between subsequent chirps. The physical mechanism responsible for this effect is for example described in: Klumperink E, van der Wel A, Kolhatkar J, Hoekstra E, Salm C, Wallinga H et al. Reduction of 1/f Noise by Switched Biasing: an Overview. In 16th Workshop on Circuits, Systems and Signal Processing, ProRISC 2005. Utrecht: STW. 2005. p. 307-315.

In some examples, the ADC 425 includes one or more transistors (not shown), wherein each transistor includes a control terminal (i.e., a base terminal of a bipolar-junction transistor or a gate terminal of a metal-oxide-semiconductor field-effect transistor). The one or more transistors may produce some or all of the flicker noise contribution of the ADC 425. In these examples, disabling the ADC 425 may include discharging the control terminals of each of the one or more transistors. In the case of metal-oxide-semiconductor field-effect transistors (MOSFET), discharging the control terminals of each of the MOSFETs may be considered to be Temporarily changing the operating conditions of the MOSFET such that the gate oxide charge is removed. A gate oxide reset can temporarily improve the intrinsic MOSFET device noise. This can be implemented by providing separate signalling for disabling and for oxide resetting.

The transistor control terminals may be discharged by any suitable mechanism. For example, the FMCW radar system may include a discharging circuit configured to connect the control terminals to ground during the reset phase Trst of the transmitter circuit 410 and to restore the normal operational connections of the control terminals at the beginning of the acquisition phase Tacq of the transmitter circuit 410. The transistor control terminal discharge mechanism may be controlled by a second control signal. The second control signal may be provided to the ADC after the first control signal. If an ADC internal timing engine is used, the second control signal may be derived from the first control signal.

In some examples, the ADC 425 includes a plurality of input stages, and the controller is configured to enable a different one of the plurality of input stages during the acquisition phase Tacq of the transmitter circuit 410.

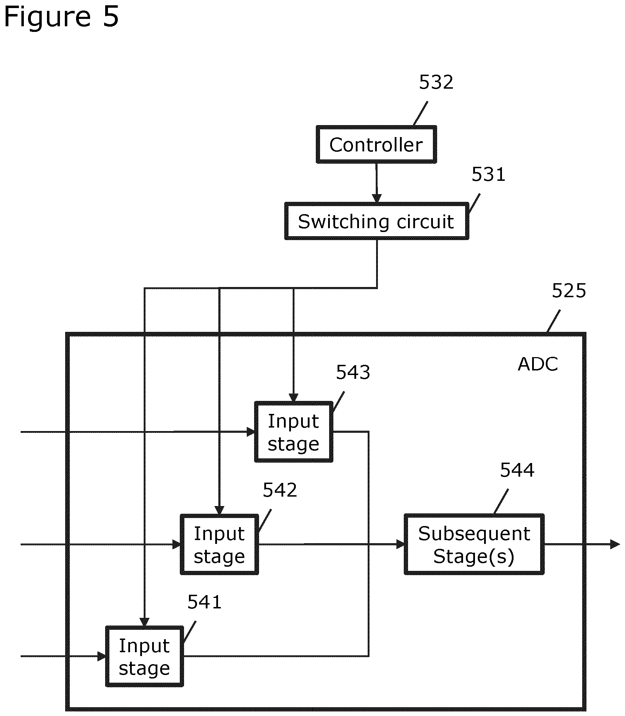

Figure 5 shows an example ADC 525 (and other relevant circuitry) which may be used within an FMCW radar system according to an embodiment of the present disclosure. The ADC 525 includes a plurality of input stages 541, 542, 543 and one or more subsequent stages 544. In some examples, the input stages 541, 542, 543 and subsequent stages 544 may be part of a loop filter. In this example, a switching circuit 531 is connected to each input stage 541, 542, 543 of the ADC 525 and a controller 532 is connected to the switching circuit 531.

In these examples, the controller 532 may be configured to sequentially enable the plurality of input stages 541, 542, 543 of the ADC 525, such that only one of the plurality of input stages 541, 542, 543 of the ADC 525 is enabled during each acquisition phase Tacq of the transmitter circuit. In this way, the off-time of each input stage 541, 542, 543 (and therefore the off-time of the devices within the input stages 541, 542, 543 which may be mostly responsible for the flicker noise) is increased beyond the time of a single reset phase Trst of the transmitter circuit. Advantageously, this reduces the flicker noise density of the of the FMCW radar system. This technique is implemented on a chirp-by-chirp basis.

Similarly, in some examples, the FMCW radar system 400 includes a plurality of ADCs, and the controller is configured to enable a different one of the plurality of ADCs during the acquisition phase Tacq of the transmitter circuit 410.

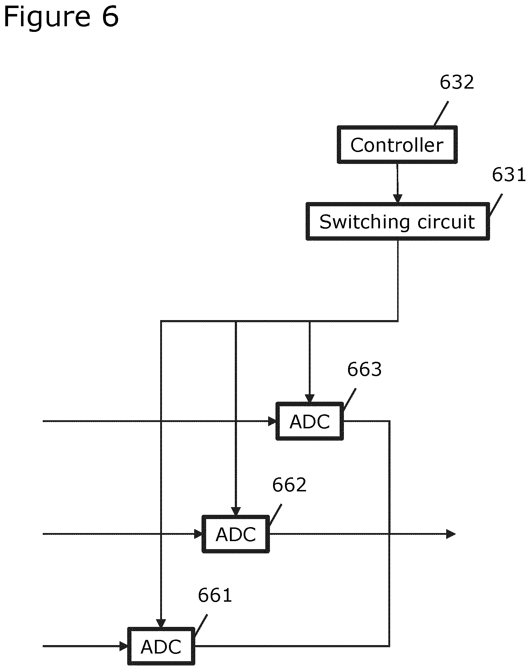

Figure 6 shows an example circuit which may be used within an FMCW radar system according to an embodiment of the present disclosure. The circuit includes a plurality of ADCs 661, 662, 663. In this example, a switching circuit 631 is connected to each ADC 661, 662, 663 of the circuit, and a controller 632 is connected to the switching circuit 631.

In these examples, the controller 632 may be configured to sequentially enable the plurality of ADCs 661, 662, 663, such that only one of the plurality of ADCs 661, 662, 663 is enabled during each acquisition phase Tacq of the transmitter circuit. In this way, the off-time of each ADC 661, 662, 663 (and therefore the off-time of the devices within the ADCs 661, 662, 663 which are responsible for the flicker noise of their respective ADC) is increased beyond the time of a single reset phase Trst of the transmitter circuit. This provides the same advantages as the examples which include a single ADC with a plurality of input stages. In some cases, the ADCs 661, 662, 663 may include devices outside of their respective input stages which contribute to the flicker noise. In these cases, the multiple ADC embodiments provide an advantage over the single-ADC-multiple-input-stage embodiments because these other devices are also disabled.

In some examples, the FMCW radar system includes a plurality of ADCs, each including a plurality of input stages, and the controller is configured to enable a different one of the input stages of the plurality of ADCs and its respective ADC during the acquisition phase Tacq of the transmitter circuit, such that one ADC and one input stage of the one ADC is enabled during each acquisition phase Tacq of the transmitter circuit. The technical effect of such an example is the same as the effects that are described above.

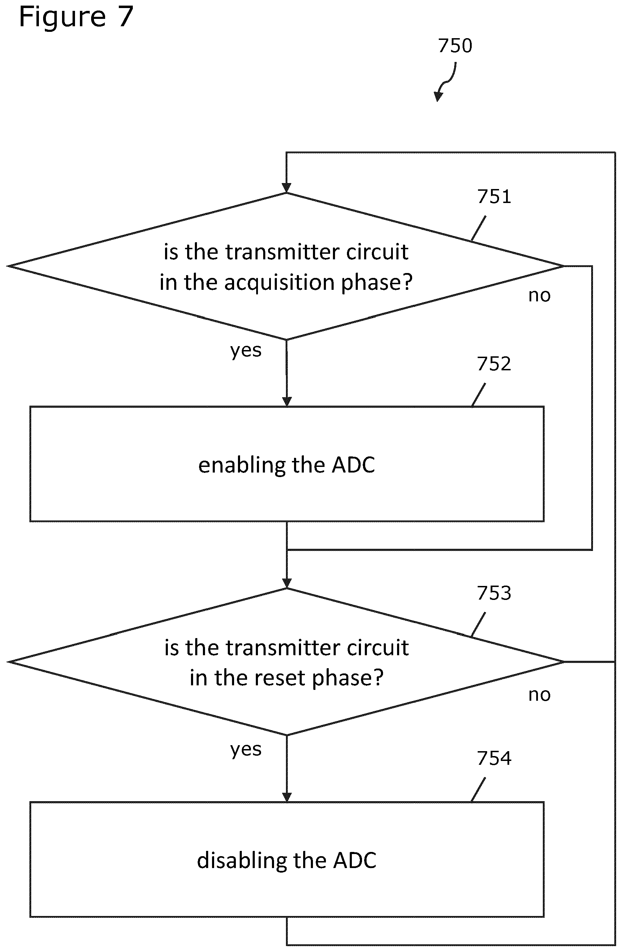

Figure 7 shows a method 750 for operating an FMCW radar system, according to an embodiment of the present disclosure. The method 750 is for operating an FMCW radar system which includes a transmitter circuit configured to transmit FMCW chirps at a chirp frequency, wherein the transmitter circuit is operable in either an acquisition phase or a reset phase. During an acquisition phase the transmitter circuit is configured to change the frequency of an output signal from a first frequency to a second frequency, and during a reset phase the transmitter circuit is configured to change the frequency of the output signal from the second frequency to the first frequency. An FMCW chirp is defined by the output signal over the course of one acquisition phase and one reset phase. The FMCW radar system also includes a receiver circuit, which includes an ADC.

The method 750 includes enabling the ADC during the acquisition phase of the transmitter circuit and disabling the ADC during the reset phase of the transmitter circuit.

This method 750 is represented in the figure by a flowchart including the steps of checking 751, 754 if the transmitter is in the acquisition phase or the reset phase and subsequently enabling 752 or disabling 754 the ADC accordingly.

In some embodiments, the method includes disabling the ADC during each reset phase of the transmitter circuit. In other embodiments, the method includes disabling the ADC during some, but not all, of the reset phases of the transmitter circuit. For example, disabling the ADC during every second reset phase of the transmitter circuit, or disabling the ADC during a reset phase of the transmitter circuit after a random number of reset phases since the previous reset phase during which the ADC was disabled.

The instructions and/or flowchart steps in the above figures can be executed in any order, unless a specific order is explicitly stated. Also, those skilled in the art will recognise that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A frequency modulated continuous wave, FMCW, radar system comprising:
a transmitter circuit configured to transmit FMCW chirps at a chirp frequency, wherein the transmitter circuit is operable in either:
an acquisition phase, during which the transmitter circuit is configured to change the frequency of an output signal from a first frequency to a second frequency; or
a reset phase, during which the transmitter circuit is configured to change the frequency of the output signal from the second frequency to the first frequency; wherein
an FMCW chirp is defined by the output signal over the course of one acquisition phase and one reset phase;
a receiver circuit, the receiver circuit comprising an analogue to digital converter, ADC; and
a controller configured to:
enable the ADC during each acquisition phase of the transmitter circuit, and
disable the ADC during a reset phase of the transmitter circuit.

2. The FMCW radar system of claim 1, wherein the controller is configured to disable the ADC during each reset phase of the transmitter circuit.

3. The FMCW radar system of claim 1, wherein the controller is configured to disable the ADC during some, but not all, of the reset phases of the transmitter circuit.

4. The FMCW radar system of any preceding claim, wherein the ADC comprises one or more transistors, wherein:
each transistor comprises a control terminal; and
disabling the ADC comprises discharging the control terminals each of the one or more transistors.

5. The FMCW radar system of any preceding claim, wherein:
the ADC comprises a plurality of input stages; and
the controller is configured to enable a different one of the plurality of input stages during the acquisition phase of the transmitter circuit.

6. The FMCW radar system of claim 5, wherein the controller is configured to sequentially enable the plurality of input stages of the ADC, such that only one of the plurality of input stages of the ADC is enabled during each acquisition phase of the transmitter circuit.

7. The FMCW radar system of any preceding claim, wherein:
the FMCW radar system comprises a plurality of ADCs; and
the controller is configured to enable a different one of the plurality of ADCs during each acquisition phase of the transmitter circuit.

8. The FMCW radar system of claim 7, wherein the controller is configured to sequentially enable the plurality of ADCs, such that only one of the plurality of ADCs is enabled during each acquisition phase of the transmitter circuit, and such that a different one of the plurality of ADCs is enabled during each subsequent acquisition phase of the transmitter circuit.

9. The FMCW radar system of any preceding claim, wherein the ADC is configured to operate at a sampling frequency.

10. The FMCW radar system of claim 9, wherein the sampling frequency is greater than the chirp frequency.

11. A method of operating an FMCW radar system comprising:
a transmitter circuit configured to transmit FMCW chirps at a chirp frequency, wherein the transmitter circuit is operable in either:
an acquisition phase, during which the transmitter circuit is configured to change the frequency of an output signal from a first frequency to a second frequency; or
a reset phase, during which the transmitter circuit is configured to change the frequency of the output signal from the second frequency to the first frequency; wherein
an FMCW chirp is defined by the output signal over the course of one acquisition phase and one reset phase;
a receiver circuit, the receiver circuit comprising an analogue to digital converter, ADC;
the method comprising:
enabling the ADC during the acquisition phase of the transmitter circuit, and
disabling the ADC during the reset phase of the transmitter circuit.

12. The method of claim 11, wherein the ADC comprises one or more transistors, wherein each transistor comprises a control terminal; and
disabling the ADC comprises discharging the control terminals each of the one or more transistors.

13. The method of any of claims 11-12, wherein:
the ADC comprises a plurality of input stages; and
the method further comprises enabling a different one of the plurality of input stages during the acquisition phase of the transmitter circuit.

14. The method of claim 13, wherein enabling a different one of the plurality of input stages during the acquisition phase of the transmitter circuit comprises sequentially enable the plurality of input stages of the ADC, such that only one of the plurality of input stages of the ADC is enabled during each acquisition phase of the transmitter circuit.

15. The method of any of claims 11-14, wherein:
the FMCW radar system comprises a plurality of ADCs; and
the method further comprises enabling a different one of the plurality of ADCs during each acquisition phase of the transmitter circuit, such that only one of the plurality of ADCs is enabled during each acquisition phase of the transmitter circuit, and such that a different one of the plurality of ADCs is enabled during each subsequent acquisition phase of the transmitter circuit.

## Amended claims

### Amended claims in accordance with Rule 137(2) EPC.

1. A frequency modulated continuous wave, FMCW, radar system (400) comprising:
a transmitter circuit (410) configured to transmit FMCW chirps at a chirp frequency, wherein the transmitter circuit is operable in either:
an acquisition phase, during which the transmitter circuit (410) is configured to change the frequency of an output signal from a first frequency to a second frequency; or
a reset phase, during which the transmitter circuit (410) is configured to change the frequency of the output signal from the second frequency to the first frequency; wherein
an FMCW chirp is defined by the output signal over the course of one acquisition phase and one reset phase;
a receiver circuit (420), the receiver circuit comprising an analogue to digital converter, ADC (425); and
a controller configured to:
enable the ADC (425) during each acquisition phase of the transmitter circuit (410), and
disable the ADC (425) during a reset phase of the transmitter circuit (410).

2. The FMCW radar system (400) of claim 1, wherein the controller is configured to disable the ADC (425) during each reset phase of the transmitter circuit (410).

3. The FMCW radar system (400) of claim 1, wherein the controller is configured to disable the ADC (425) during some, but not all, of the reset phases of the transmitter circuit (410).

4. The FMCW radar system (400) of any preceding claim, wherein the ADC (425) comprises one or more transistors, wherein:
each transistor comprises a control terminal; and
disabling the ADC (425) comprises discharging the control terminals each of the one or more transistors.

5. The FMCW radar system (400) of any preceding claim, wherein:
the ADC (525) comprises a plurality of input stages (541, 542, 543) and one or more subsequent stages (544);
each of the plurality of input stages (541, 542, 543) are connected in parallel to the one or more subsequent stages (544); and
the controller is configured to enable a different one of the plurality of input stages (541, 542, 543) during each acquisition phase of the transmitter circuit (410).

6. The FMCW radar system (400) of claim 5, wherein the controller is configured to sequentially enable the plurality of input stages (541, 542, 543) of the ADC (525), such that only one of the plurality of input stages of the ADC is enabled during each acquisition phase of the transmitter circuit (410).

7. The FMCW radar system (400) of any preceding claim, wherein:
the FMCW radar system (400) comprises a plurality of ADCs (661, 662, 663); and
the controller is configured to enable a different one of the plurality of ADCs (661, 662, 663) during each acquisition phase of the transmitter circuit (410).

8. The FMCW radar system (400) of claim 7, wherein the controller is configured to sequentially enable the plurality of ADCs (661, 662, 663), such that only one of the plurality of ADCs is enabled during each acquisition phase of the transmitter circuit (410), and such that a different one of the plurality of ADCs is enabled during each subsequent acquisition phase of the transmitter circuit.

9. The FMCW radar system (400) of any preceding claim, wherein the ADC (425) is configured to operate at a sampling frequency.

10. The FMCW radar system (400) of claim 9, wherein the sampling frequency is greater than the chirp frequency.

11. A method of operating an FMCW radar system (400) comprising:
a transmitter circuit (410) configured to transmit FMCW chirps at a chirp frequency, wherein the transmitter circuit is operable in either:
an acquisition phase, during which the transmitter circuit (410) is configured to change the frequency of an output signal from a first frequency to a second frequency; or
a reset phase, during which the transmitter circuit (410) is configured to change the frequency of the output signal from the second frequency to the first frequency; wherein
an FMCW chirp is defined by the output signal over the course of one acquisition phase and one reset phase;
a receiver circuit (420) , the receiver circuit comprising an analogue to digital converter, ADC (425);
the method comprising:
enabling the ADC (425) during the acquisition phase of the transmitter circuit (410), and
disabling the ADC (425) during the reset phase of the transmitter circuit (410).

12. The method of claim 11, wherein the ADC (425) comprises one or more transistors, wherein each transistor comprises a control terminal; and
disabling the ADC (425) comprises discharging the control terminals each of the one or more transistors.

13. The method of any of claims 11-12, wherein:
the ADC (525) comprises a plurality of input stages (541, 542, 543) and one or more subsequent stages (544), wherein each of the plurality of input stages are connected in parallel to the one or more subsequent stages; and
the method further comprises enabling a different one of the plurality of input stages (541, 542, 543) during each acquisition phase of the transmitter circuit (410).

14. The method of claim 13, wherein enabling a different one of the plurality of input stages (541, 542, 543) during each acquisition phase of the transmitter circuit (410) comprises sequentially enabling the plurality of input stages of the ADC (525), such that only one of the plurality of input stages of the ADC is enabled during each acquisition phase of the transmitter circuit.

15. The method of any of claims 11-14, wherein:
the FMCW radar system (400) comprises a plurality of ADCs (661, 662, 663); and
the method further comprises enabling a different one of the plurality of ADCs (661, 662, 663) during each acquisition phase of the transmitter circuit (410), such that only one of the plurality of ADCs is enabled during each acquisition phase of the transmitter circuit, and such that a different one of the plurality of ADCs is enabled during each subsequent acquisition phase of the transmitter circuit.
